# EUROPEAN PATENT SPECIFICATION

(11) **EP 2 198 102 B1**
(45) Date of publication and mention of the grant of the patent: **16.03.2016**
(21) Application number: 08806942.2
(22) Date of filing: 29.08.2008
(51) Int. Cl.: E05D 11/00, B60R 21/34

(54) **HINGE ASSEMBLY**
SCHARNIERANORDNUNG
ENSEMBLE CHARNIÈRE

(30) Priority: 01.09.2007 GB 0717044
(43) Date of publication of application: 23.06.2010
(73) Proprietor: Wild Manufacturing Group Limited, Witton Birmingham B6 7EB (GB)
(72) Inventor: CHEAL, Jonathan, Paul, Anthony, Tamworth Staffordshire B79 7UA (GB); PROFFITT, Andrew, Pattingham Wolverhampton WV6 7BY (GB); PYE, Stephen, Burntwood Staffordshire WS7 0EY (GB)
(74) Representative: Boult Wade Tennant
(86) International application number: PCT/IB2008/002240
(87) International publication number: WO 2009/027807

(56) References cited:
- WO-A-2004/094204
- DE-A1-102005 007 903
- US-A1- 2007 062 747

## Description

### Field of the Invention

This invention relates to a hinge assembly for connecting a bonnet to a body of a vehicle, the hinge assembly allowing a front portion of the bonnet to be raised to give access to an engine of the vehicle, and allowing a rear portion of the bonnet to be raised in the event of a collision with a pedestrian so as to provide a cushion between the pedestrian and the engine.

### Background to the Invention

It has been found that, in the event of a collision between a vehicle and a pedestrian, the head and torso of the pedestrian will often be thrown against the bonnet of the vehicle, causing the bonnet to deform into the engine compartment of the vehicle until the bonnet meets the engine, whereupon the head and/or torso of the pedestrian suffer a deceleration of sufficient magnitude to injure or kill the pedestrian.

It has therefore been proposed to connect the bonnet to the body of the vehicle by a hinge that allows a front portion of the bonnet to be raised, in a conventional manner, to give access to an engine of the vehicle, but that also allows a rear portion of the bonnet to be raised in the event of a collision with a pedestrian so as to provide a cushion between the pedestrian and the engine that reduces the magnitude of the deceleration suffered by the head and/or torso of the pedestrian.

WO 2004/094204 discloses a safety device that is effective to lift a rear portion of a bonnet of a vehicle. The rear portion of the bonnet is connected to a body of the vehicle by a hinge arrangement to permit a front portion of the bonnet to be opened. The hinge arrangement comprises a mounting arm having one end thereof pivotally connected to the body of the vehicle and having part thereof releasably connected to the bonnet. A release mechanism is provided that is effective to release the connection. The hinge arrangement is associated with a gas spring that is located so as to raise the rear portion of the bonnet when the connection is released.

The safety device of WO 2004/094204 is relatively difficult to operate because it requires the connection between the mounting arm and the bonnet to be released before the gas spring can raise the rear portion of the bonnet. This is achieved by a relatively complex release mechanism that either vents some of the gas from the gas spring to move a piston element, or that fires an explosive charge to move the piston element.

DE 102005007903 discloses a hinge assembly according to the preamble of claim 1.

### Summary of the Invention

According to the present invention, there is provided a hinge assembly as per claim 1.

According to a first aspect of the invention there is provided a hinge assembly comprising first, second, third and fourth links and a locking mechanism, the first link being pivotally connected to the second link and being integrally formed with, or adapted to be attached to, one of a vehicle body and a vehicle bonnet, the third link being pivotally connected between the second and fourth links, the fourth link being integrally formed with, or adapted to be attached to, the other of a vehicle body and a vehicle bonnet, and the locking mechanism being engageable with, and releasable from, a lockable link, the lockable link being one of the second and fourth links, so as to prevent and allow, respectively, relative movement between the second and fourth links, wherein the third link is pivotally connected to one of the second and fourth links by a moveable pivot, which allows the third link to be rotated relative to the second and fourth links from a first position to a second position in which the pivot or the third link engages the lockable link, the third link being engageable with the locking mechanism such that when the locking mechanism is engaged with the lockable link, rotation of the third link from the first to the second position releases the locking mechanism from the lockable link.

The invention can provide a hinge assembly that is easier to operate than known hinge assemblies, because a rear portion of a bonnet connected to a body of a vehicle by the hinge assembly can be raised simply by applying a force of sufficient magnitude to the third link in the direction required to rotate the third link from the first to the second position.

The first link may advantageously be pivotally connected to the second link by a single pivot.

Alternatively the first link may advantageously be pivotally connected to the second link by an intermediate link, a first portion of the intermediate link being pivotally connected to the first link by a single pivot, and a second portion of the intermediate link being pivotally connected to the second link by a single pivot.

The first link may advantageously be integrally formed with, or adapted for attachment to, a vehicle bonnet.

With this construction of the hinge assembly, in order to raise a rear portion of a bonnet connected to a body of a vehicle by the hinge assembly, the first, second and third links must be raised as well as the rear portion of the bonnet.

Preferably, therefore, the first link is integrally formed with, or adapted for attachment to, a vehicle body.

With this construction of the hinge assembly, in order to raise a rear portion of a bonnet connected to a body of a vehicle by the hinge assembly, only the third and fourth links must be raised as well as the rear portion of the bonnet.

With this construction of the hinge assembly, therefore, for a given magnitude of force applied to raise the rear portion of the bonnet, the rear portion of the bonnet can be raised more quickly, because the inertia of the third and fourth links is less than the inertia of the first, second and third links.

The third link is pivotally connected between the second and fourth links with a first portion of the third link pivotally connected to one of the second and fourth links by the moveable pivot, and a second portion of the third link pivotally connected to the other of the second and fourth links by a single pivot.

This gives rise to a hinge assembly of relatively simple construction.

Alternatively the third link may advantageously be pivotally connected between the second and fourth links with a first portion of the third link pivotally connected to one of the second and fourth links by the moveable pivot, and a second portion of the third link pivotally connected to the other of the second and fourth links by an intermediate link, a first portion of the intermediate link being pivotally connected to the third link by a single pivot, and a second portion of the intermediate link being pivotally connected to the other of the second and fourth links by a single pivot.

This gives rise to a hinge of relatively compact construction without restricting a distance by which the fourth link can be moved relative to the second link.

Where the third link is so pivotally connected between the second and fourth links, the hinge assembly may advantageously further comprise a control link, a first portion of the control link being pivotally connected to the third link by a single pivot, and a second portion of the control link being pivotally connected to the other of the second and fourth links by a single pivot.

This gives rise to a hinge of which a path followed by the fourth link when moved relative to the second link is determined by the relative lengths of the intermediate and control links connecting the third link to the other of the second and fourth links.

Thus by selecting appropriate relative lengths of the intermediate and control links, the hinge assembly can be arranged such that, when used to connect a bonnet to a body of a vehicle, movement of the fourth link relative to the second link causes the bonnet to be moved towards the rear of the vehicle, as well as raising a rear portion of the bonnet, so as to prevent a front portion of the bonnet from colliding with a front portion of the body, which would otherwise damage the bonnet and/or the body.

The third link may advantageously be provided with a roller, the roller being engageable with the locking mechanism such that when the locking mechanism is engaged with the lockable link, rotation of the third link from the first to the second position releases the locking mechanism from the lockable link.

The roller reduces the friction that would otherwise have to be overcome between the third link and the locking mechanism in order to release the locking mechanism from the lockable link.

Where the hinge assembly is used to connect a bonnet to a body of a vehicle, the locking mechanism may advantageously be attached to the bonnet or the body of the vehicle.

Preferably, however, the locking mechanism is attached to the other of the second and fourth links from the lockable link.

In this way the need for adjustment of the hinge assembly when used to connect a bonnet to a body of a vehicle during manufacture of the vehicle to ensure correct alignment of the locking mechanism with the lockable link is avoided.

The locking mechanism may advantageously be engageable with a single portion of the lockable link.

Preferably, however, the locking mechanism is engageable with a plurality of portions of the lockable link.

In this way, play between the second and fourth links when the locking mechanism is engaged with the lockable link can be reduced.

Preferably the hinge further comprises biasing means arranged to urge the locking mechanism into engagement with the lockable link.

In this way, play between the second and fourth links when the locking mechanism is engaged with the lockable link can be further reduced.

The locking mechanism comprises first and second locking members engageable with, and releasable from, respective first and second portions of the lockable link, the first locking member being engageable with the third link and the second locking member, the first and second locking members being arranged such that when the locking members are engaged with the lockable link, rotation of the third link from the first to the second position moves the first locking member from a first position, through an intermediate position, to a second position to release the first locking member from the first portion of the lockable link, and movement of the first locking member from the intermediate position to the second position causes the first locking member to engage the second locking member and to release the second locking member from the second portion of the lockable link.

Where the locking mechanism is so constructed, the hinge assembly preferably further comprises first and second biasing means arranged to urge the first and second locking members into engagement with the first and second portions of the lockable link.

In this way, play between the second and fourth links when the locking mechanism is engaged with the lockable link is substantially eliminated, whilst reducing the likelihood of the locking mechanism being released accidentally from the lockable link, for example by vibration.

The hinge assembly further comprises an actuator operable to urge the third link from the first position to the second position, in which the moveable pivot or the third link engages the lockable link, so as to release the locking mechanism from the lockable link and to move the lockable link relative to the other of the second and fourth links.

Although it is envisaged that the actuator can include a solenoid or a combination of a piston and an explosive charge, the actuator preferably includes a combination of a piston and a supply of compressed gas.

Preferably the piston is constituted by a telescopic ram that can be extended so as to urge the third link from the first position to the second position by release of gas into the ram from the supply of compressed gas.

Where the hinge includes an actuator, the actuator may advantageously include a portion that is pivotally connected to the third link.

Where the actuator includes a telescopic ram, that end of the ram which extends so as to urge the third link from the first position to the second position may advantageously be formed with an eye pivotally connected to the third link.

Where the hinge assembly is used to connect a bonnet to a body of a vehicle, the actuator may advantageously be attached to the bonnet or the body of the vehicle.

If the actuator were to be attached to the bonnet, the inertia of the rear portion of the bonnet and that part of the hinge which must be raised with the rear portion of the bonnet would be increased, thereby reducing the speed with which the actuator is able to raise the rear portion of the bonnet. The actuator is therefore preferably attached to the body of the vehicle.

More preferably still, however, the actuator is attached to the other of the second and fourth links to which the third link is connected by the moveable pivot.

In this way the need for adjustment of the hinge assembly when used to connect a bonnet to a body of a vehicle during manufacture of the vehicle to ensure correct alignment of the actuator with the third link is avoided.

According to a second aspect of the invention there is provided a vehicle comprising a bonnet and a body, wherein the bonnet is attached to the body by a hinge assembly in accordance with the first aspect of the invention.

### Brief Description of the Drawings

The invention will now be described, by way of example, with reference to the accompanying drawing, in which:
Figure 1 is a perspective view of a first embodiment of a hinge assembly in accordance with the invention in an extended condition so as to raise a rear portion of a bonnet connected to a body of a vehicle by the hinge assembly;
Figure 2 is a perspective view of the hinge assembly of Figure 1 in an unextended condition;
Figure 3 is a perspective view of a second embodiment of a hinge assembly in accordance with the invention in an extended condition;
Figure 4 is a side view of the hinge assembly of Figure 3 in the extended condition;
Figure 5 is a side view of the hinge assembly of Figures 3 and 4 in an unextended condition;
Figure 6 is a sectional view of the hinge assembly of Figures 3 to 5 showing a locking mechanism of the hinge assembly;
Figures 7 and 8 are partial sectional views of the hinge assembly of Figures 3 to 6, showing the interaction of a third link with the locking mechanism of the hinge assembly;
Figures 9 and 10 are partial sectional views of the hinge assembly of Figures 3 to 6, showing the interaction of the third link, locking mechanism and a link to which the third link is connected by a moveable pivot; and
Figures 11 to 13 are partial sectional views of the hinge assembly of Figures 3 to 6, showing the interaction of the locking mechanism and the link to which the third link is connected by the moveable pivot.

### Detailed Description of Embodiments

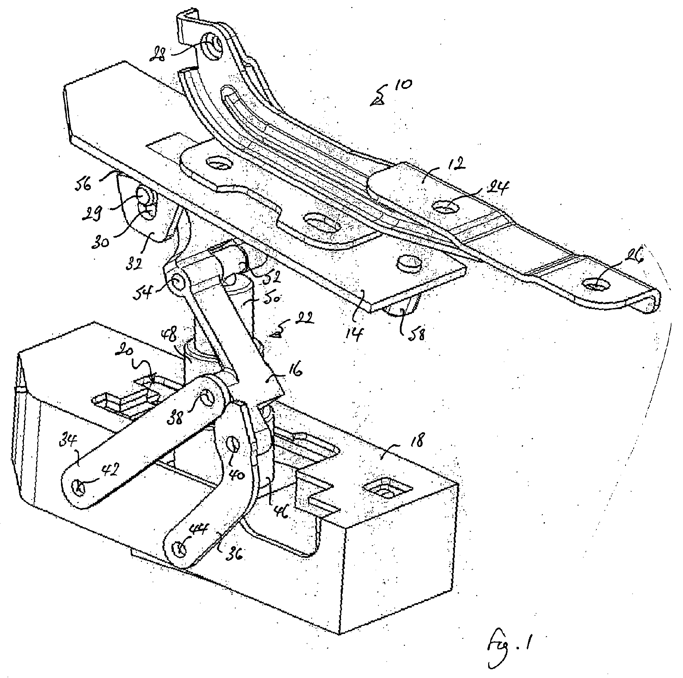

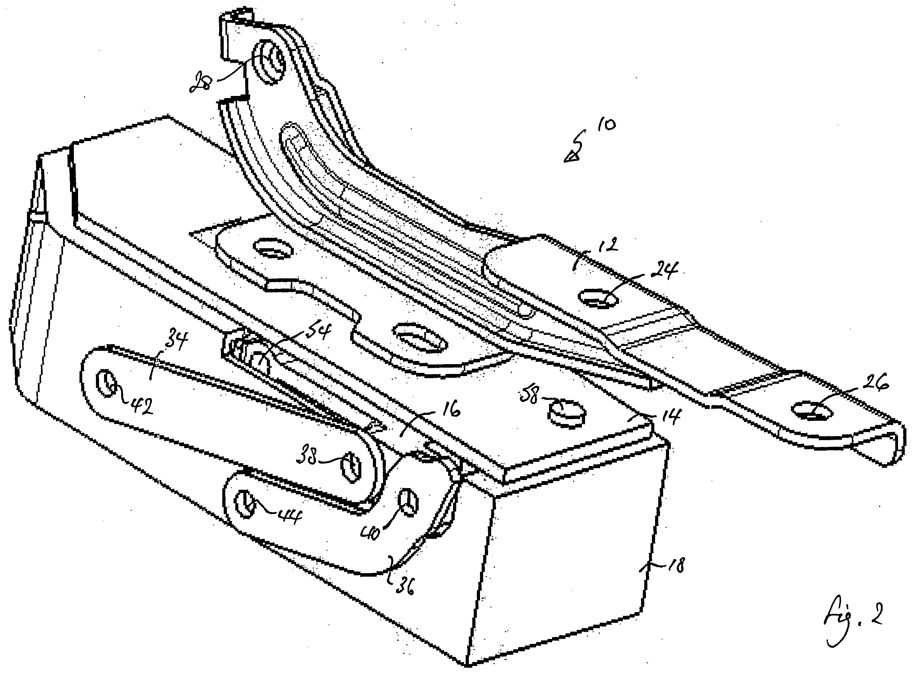

The hinge assembly 10 of Figures 1 and 2 comprises first, second, third and fourth links 12, 14, 16 and 18, respectively, a locking mechanism denoted generally by reference numeral 20 and an actuator including a telescopic ram denoted generally by reference numeral 22.

The first link 12 is provided with screw holes 24 and 26 to enable a rear portion of a vehicle bonnet (not shown) to be attached to the first link. The first link 12 is connected to the second link 14 by a pivot 28. The second link 14 is connected to the third link 16 by a moveable pivot 29, which is slidable in two parallel slots, one slot being formed in each of two lugs, which project from the second link 14. In Figure 1 one of the slots and one of the lugs are visible, denoted, respectively, by reference numerals 30 and 32.

The third link 16 is connected to the fourth link 18 by an intermediate link 34 and a control link 36. First ends of the intermediate and control links 34 and 36 are connected to the third link 16 by pivots 38 and 40, respectively, and second ends of the intermediate and control links 34 and 36 are connected to the fourth link 18 by pivots 42 and 44, respectively.

A wide portion 46 of the telescopic ram 22 is attached to the fourth link 18, which is provided with screw holes (not shown) to enable the fourth link to be attached to a vehicle body (not shown). A medium portion 48 of the telescopic ram 22 forms a sliding fit inside the wide portion 46. A narrow portion 50 of the telescopic ram 22 forms a sliding fit inside the medium portion 48. The actuator includes a reservoir (not shown) of compressed gas and a valve-controlled connection (not shown) from the reservoir to the wide portion 46, such that gas can be released from the reservoir into the wide portion 46 of the ram 22, so as to drive the medium portion 48 out of the wide portion 46 towards the second link 14 and the narrow portion 50 out of the medium portion 48 towards the second link 14. The end of the narrow portion 50 is formed with an eye 52 for receiving a pivot 54 by which the eye 52 is connected to the third link 16.

In normal use of the hinge assembly 10 the second link 14 abuts the fourth link 18 and the third link 16 lies substantially parallel to the second and fourth links 14 and 18, as shown in Figure 2. The lugs 32 of the second link 14 are each formed with a notch, one of which is visible in Figure 1, denoted by reference numeral 56. A peg 58 projects from the second link 14, the peg being formed with a notch (not visible in Figure 1). When the second link 14 abuts the fourth link 18, the locking mechanism engages the notches 56 of the lugs 32 and the notch of the peg 58, so as to prevent relative movement of the second and fourth links 14 and 18.

The hinge assembly 10 would be used to connect a rear portion of a bonnet to a body of a vehicle, with the lugs 32 nearer to a rear edge of the bonnet and the peg 58 nearer to a front edge of the bonnet. The first link 12 is freely rotatable relative to the second link 14 by virtue of the pivot 28, so that a front portion of the bonnet can be raised to give access to an engine of the vehicle.

In the event of a collision with a pedestrian, the locking mechanism 20 is released from the notches of the lugs 32 and peg 58 to allow relative movement between the second and fourth links 14 and 18. The telescopic ram 22 urges the third link 16 away from the fourth link 18 and, by virtue of the engagement of the moveable pivot 29 with the second link 14, urges the second link 14 away from the fourth link 18, so as to place the hinge assembly into the extended condition shown in Figure 1, and raise the rear portion of the bonnet from the engine of the vehicle.

It will be appreciated that the relative positions of the pivots 38 and 40 about which the third link 16 rotates, the pivot 54 through which the force exerted by the telescopic ram 22 acts, and the moveable pivot 29 that raises the second link 14 have a magnifying effect on the distance through which the rear portion of the bonnet is raised, as compared with the extension of the telescopic ram 22. Using a prototype of the hinge assembly it has been found that the rear portion of the bonnet can be raised by some 120 mm as a result of only approximately 70 mm of extension of the telescopic ram 22.

The lengths of the intermediate and control links 34 and 36 are chosen such that, as the rear portion of the bonnet is raised, the bonnet at the same time moves towards the rear of the vehicle. This prevents the front edge of the bonnet from colliding with the body of the vehicle, which would otherwise occur, thereby damaging the bonnet and/or the body of the vehicle. This is desirable because, although, in the event of a collision with a pedestrian, it is likely that the bonnet and/or the body of the vehicle will be damaged, it is conceivable that the hinge assembly might be placed in the extended condition in other circumstances, such as to give access to an inaccessible portion of the body and/or bonnet of the vehicle during painting of the vehicle, or as a result of unintended operation of the actuator. In these circumstances it would be undesirable for the bonnet and/or body of the vehicle to be damaged.

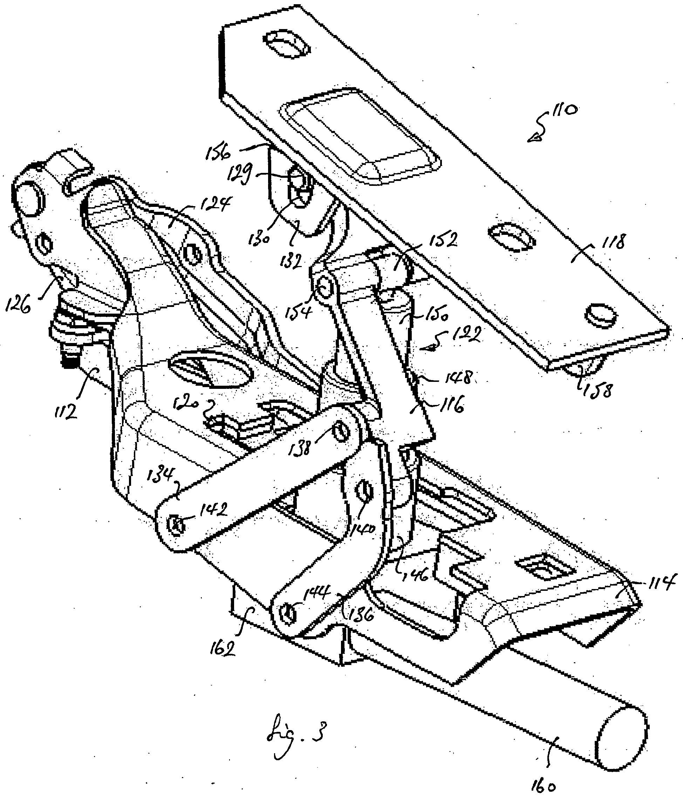

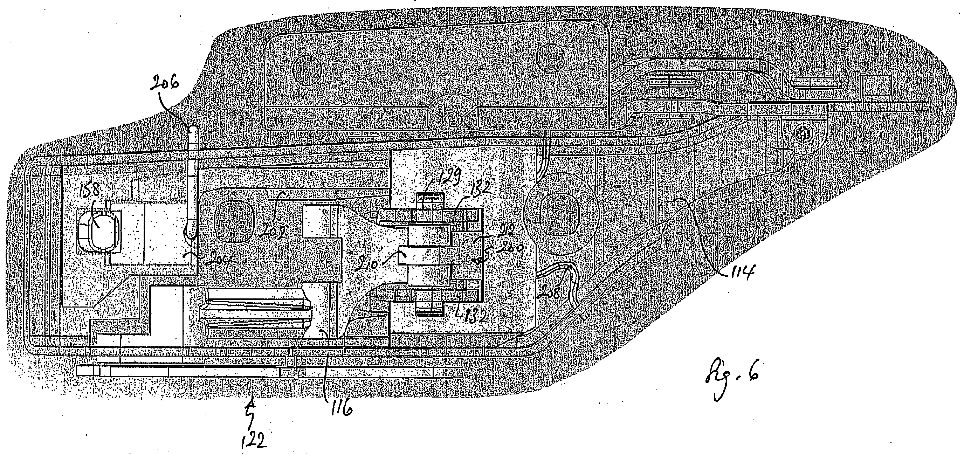

The locking mechanism 20 is identical with that of the hinge assembly shown in Figures 3 to 5, the structure and operation of the locking mechanism of which is described in detail below with reference to Figures 6 to 13.

Turning to Figure 3, the hinge assembly 110 comprises first, second, third and fourth links 112, 114, 116 and 118, respectively, a locking mechanism denoted generally by reference numeral 120 and an actuator including a telescopic ram denoted generally by reference numeral 122.

The first link 112 is provided with screw holes, which are not visible in Figure 3, to enable the first link 112 to be attached to a vehicle body (not shown). The first link 112 is connected to the second link 114 by long and short links 124 and 126, respectively, pivotally connected between the first and second links 112 and 114 such that the first, second, long and short links 112, 114, 124 and 126 form a four-link hinge of the type well known in the automotive industry.

The second link 114 is connected to the third link 116 by intermediate and control links 134 and 136, respectively. First ends of the intermediate and control links 134 and 136 are connected to the third link 116 by pivots 138 and 140, respectively, and second ends of the intermediate and control links 134 and 136 are connected to the second link 114 by pivots 142 and 144, respectively.

The third link 116 is connected to the fourth link 118 by a moveable pivot 129, which is slidable in two parallel slots, one slot being formed in each of two lugs, which project from the fourth link 118 towards the second link 114. In Figure 3 one of the slots and one of the lugs are visible, denoted, respectively, by reference numerals 130 and 132.

A wide portion 146 of the telescopic ram 122 is attached to the second link 114. A medium portion 148 of the telescopic ram 122 forms a sliding fit inside the wide portion 146. A narrow portion 150 of the telescopic ram 22 forms a sliding fit inside the medium portion 148. The actuator includes a reservoir 160 of compressed gas and a valve-controlled connection 162 from the reservoir 160 to the wide portion 146, such that gas can be released from the reservoir 160 into the wide portion 146 of the ram 122, so as to drive the medium portion 148 out of the wide portion 146 towards the fourth link 118 and the narrow portion 150 out of the medium portion 148 towards the second link 14. The end of the narrow portion 150 is formed with an eye 152 for receiving a pivot 154 by which the eye 152 is connected to the third link 116.

In normal use of the hinge assembly 110 the fourth link 118 abuts the second link 114 and the third link 116 lies substantially parallel to the second and fourth links 114 and 118. The lugs 132 of the fourth link 118 are each formed with a notch, one of which is visible in Figure 3, denoted by reference numeral 156. A peg 158 projects from the fourth link 118 towards the second link 114, the peg 158 being formed with a notch (not visible in Figure 3). When the fourth link 118 abuts the second link 114, the locking mechanism engages the notches 156 of the lugs 132 and the notch of the peg 158, so as to prevent relative movement of the second and fourth links 114 and 118.

The hinge assembly 110 would also be used to connect a rear portion of a bonnet to a body of a vehicle, with the lugs 132 nearer to a rear edge of the bonnet and the peg 158 nearer to a front edge of the bonnet. The second link 114 is freely rotatable relative to the first link 112 by virtue of the pivotable connections of the long and short links 124 and 126 to the first and second links, so that a front portion of the bonnet can be raised to give access to an engine of the vehicle.

In the event of a collision with a pedestrian, the locking mechanism 120 is released from the notches of the lugs 132 and peg 158 to allow relative movement between the second and fourth links 114 and 118. The telescopic ram 122 urges the third link 116 away from the second link 114 and, by virtue of the engagement of the pivot 129 with the fourth link 118, urges the fourth link 118 away from the second link 114, so as to place the hinge assembly into the extended condition shown in Figure 3, and raise the rear portion of the bonnet from the engine of the vehicle.

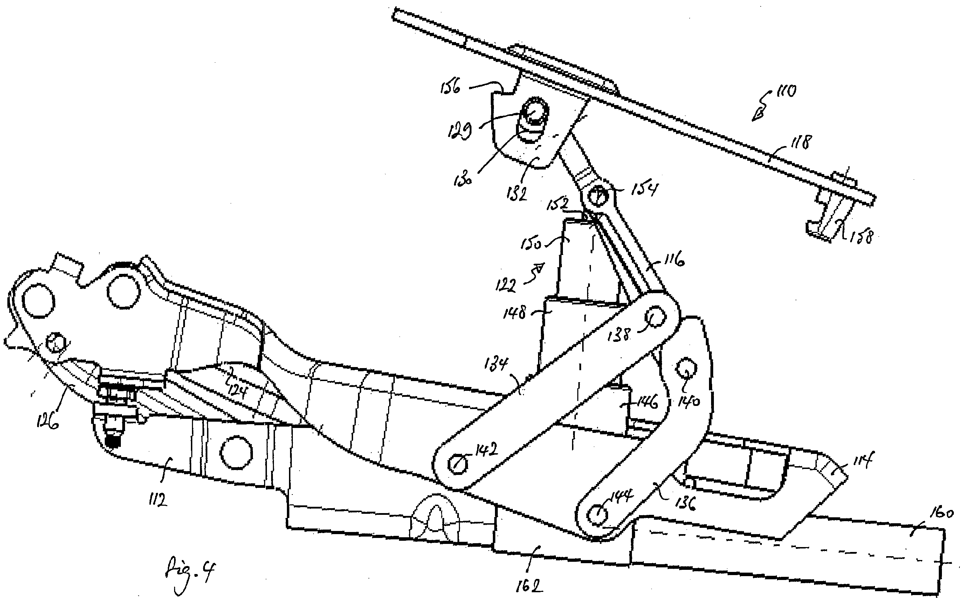

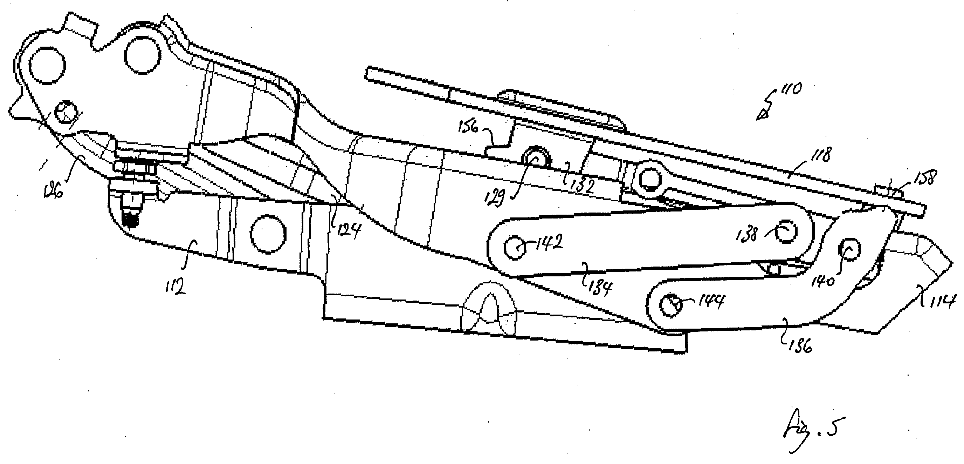

Figure 4 corresponds to Figure 3 and Figure 5 shows the hinge assembly in a partially extended condition, in which the locking mechanism has been released from the notches of the lugs 132 and peg 158 and a small movement of the fourth link 118 away from the second link 114 has occurred.

Figure 6 shows the locking mechanism 122, which comprises a plate 200 attached to the second link 114 so as to be slideable along the second link 114, an arm 202 attached to the plate and received in a shoe 204 attached to the second link 114 so as to be slideable along the second link, and biasing means in the form of first and second wire springs 206 and 208, the first spring 206 being arranged to urge the shoe 204 towards the end of the hinge that, in use would be nearer to the front end of the vehicle, and the second spring 208 being arranged to urge the plate 200 in the same direction.

When the fourth link 118 abuts the second link 114, the lugs 132 and the peg 158 are received into openings formed in the second link 114. The plate 200 is urged by the second spring 208 into the notches 156 of the lugs 132 and the shoe 204 is urged by the first spring 206 into the notch of the peg 158. The engagement of the shoe and plate with the notches of the lugs and peg prevents relative movement of the second and fourth links 114 and 118.

The shoe 204 has a slot (not shown) in its underside for receiving the arm 202. The width of the slot and the length of the arm are selected so that slight movement of the arm is possible before the arm engages the shoe, so as to disengage the shoe from the notch of the peg 158. This is advantageous because it means that the shoe and plate can move independently of one another, such that if vibration causes one of the shoe and plate to disengage from its respective notch or notches, the other will not necessarily disengage from its respective notch or notches. The independent movement of the shoe and plate also mean that slight misalignments of the second and fourth links due to manufacturing tolerances will not significantly affect the engagement of the plate and shoe with the notches.

The moveable pivot 129 of the third link 116 has a roller 210 mounted on it between the lugs 132. The plate 200 is formed with a tongue 212. The tongue 212 is so located, and the diameter of the roller 210 is such, that movement of the moveable pivot 129, and hence the roller 210, in the slot 130 from a first position to the second position shown in Figures 3 and 4 causes the roller to engage the tongue and to move the tongue, against the action of the second spring 208, away from the peg 158, thereby disengaging the plate 200 from the notches of the lugs 132. The movement of the tongue due to the engagement with the roller both disengages the plate from the notches of the lugs and causes the arm 202 to engage the shoe 204, the engagement of the arm 202 and movement of the tongue 212 disengaging the shoe 204 from the notch of the peg 158.

The operation of the locking mechanism is particularly advantageous, in that the springs 206 and 208 cause the plate and shoe to engage the notches of the lugs 132 and peg 158 when the fourth link 118 is pushed into abutment with the second link 114. This means that, following operation of the actuator to lift the rear portion of the bonnet, the rear portion can be pushed down again and will lock into place, so that the vehicle can be driven. This is not possible with known hinge assemblies.

In the event of a false triggering of the actuator, the rear portion of the bonnet will be raised but there will be no damage to the bonnet or body. The rear portion of the bonnet can then simply be pushed down into place and the vehicle driven to a garage, where the exhausted reservoir 160 of compressed gas can be replaced.

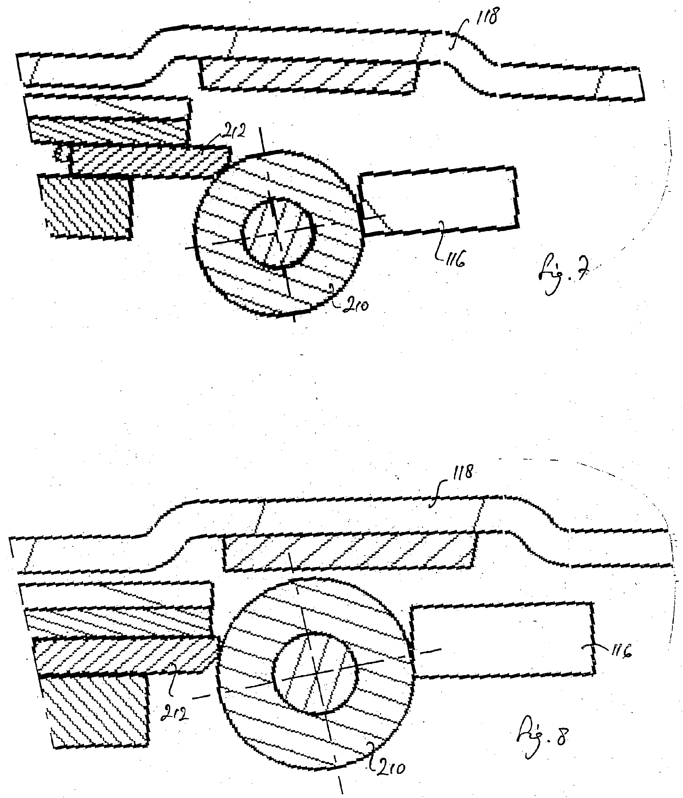

Figure 7 shows the roller 210 and tongue 212 of the plate 200 in the same relative positions as shown in Figure 6. The roller 210 is engaged with the tongue 212, which prevents rotation of the third link 116 away from the second link 114 towards the fourth link 118.

In Figure 8 a force has been applied to the third link 116 by the telescopic ram (not shown) in the direction of the fourth link 118 from the second link 114 of sufficient magnitude to cause the roller 210 to displace the tongue 212, thereby releasing the plate 200 and the shoe 204 from the notches of the lugs 132 and peg 158.

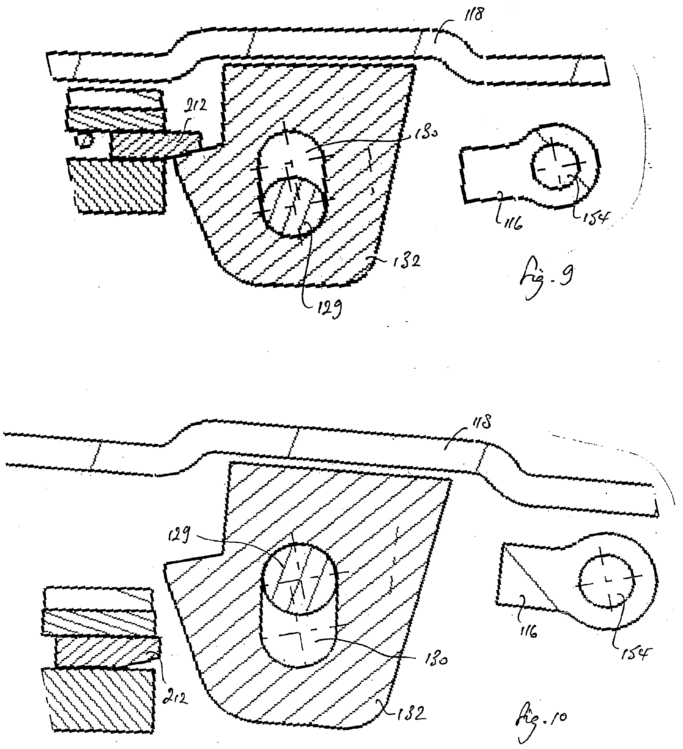

Figure 9 shows the moveable pivot 129 in the slot 130 of a lug 132, and corresponds to Figure 7. The engagement of the tongue 212 with the roller 210 urges the moveable pivot 129 to the end of the slot 130 further from the fourth link 118.

In Figure 10 the force has been applied to the third link 116 by the telescopic ram (not shown) through the pivot 154 and has urged the moveable pivot 129 to the end of the slot 130 nearer to the fourth link 118, at the same time releasing the plate 200 and the shoe 204 from the notches of the lugs 132 and peg 158, so as to permit relative movement of the fourth and second links 118 and 114, and a small amount of such relative movement has taken place.

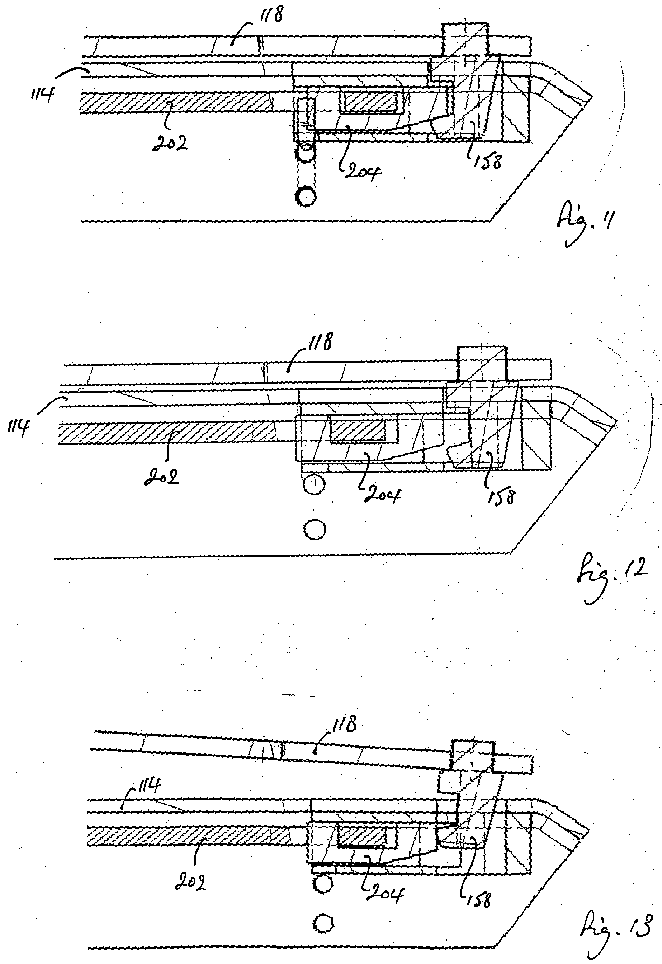

Figures 11, 12 and 13 show the arm 202, shoe 204 and the notch of the peg 158. Figure 11 corresponds to Figures 7 and 9 and shows the shoe 204 engaged with the notch of the peg 158 so as to prevent relative movement of the second and fourth links 114 and 118. As can be seen from Figure 11, there is a gap between the portion of the arm 202 that engages the shoe 204 and the shoe 204 before the force is applied to the third link 116. As explained above, this allows slight independent movement of the plate and the shoe, so that movement of one of the plate and the shoe due to vibration of the hinge assembly does not necessarily result in movement of the other of the plate and the shoe, thereby reducing a risk of unintentional release of the locking mechanism.

In Figure 12 the arm 202 has been moved sufficiently far as a result of movement of the third link 116 towards the fourth link 118 to cause the arm 202 to engage the shoe 204 and disengage the shoe 204 from the slot of the peg 158, so as to allow relative movement between the second and fourth links 114 and 118.

In Figure 13 relative movement of the second and fourth links 114 and 118 has taken place, so as partially to raise the rear portion of the bonnet.

## Claims

1. A hinge assembly (10, 110) comprising first (12, 112), second (14, 114), third (16, 116) and fourth (18, 118) links and a locking mechanism (20, 120);
the first link (12, 112) being pivotally connected to the second link (14, 114) and being integrally formed with, or adapted to be attached to, one of a vehicle body and a vehicle bonnet;
the third link (16, 116) being pivotally connected between the second and fourth links;
the fourth link (18, 118) being integrally formed with, or adapted to be attached to, the other of a vehicle body and a vehicle bonnet; and
the locking mechanism (20, 120) being engageable with, and releasable from, a lockable link (14, 114; 18, 118), the lockable link being one of the second and fourth links, so as to prevent and allow, respectively, relative movement between the second and fourth links;
the third link (16, 116) being engageable with the locking mechanism (20, 120) such that when the locking mechanism is engaged with the lockable link, rotation of the third link from the first to the second position releases the locking mechanism from the lockable link; **characterized in that**
the third link (16, 116) is pivotally connected to the lockable link by a movable pivot (29,129), which allows the third link to be rotated relative to the second and fourth links from a first position to a second position in which the pivot of the third link engages the lockable link;
the third link (16, 116) is pivotally connected between the second and fourth links with
a first portion of the third link pivotally connected to the lockable link by the movable pivot (29, 129), and
a second portion of the third link pivotally connected to the other of the second and fourth links by an intermediate link (34, 134), a first portion of the intermediate link (34, 134) being pivotally connected to the third link by a single pivot (38, 138), and a second portion of the intermediate link (34, 134) being pivotally connected to the other of the second and fourth links by a single pivot (42, 142);
the locking mechanism comprises first (212) and second (204) locking members engageable with, and releasable from, respective first (32, 132) and second (58, 158) portions of the lockable link,
the first locking member (212) being engageable with the third link (16, 116) and the second locking member (204),
the first and second locking members (212, 204) being arranged such that when the locking members are engaged with the lockable link (14, 114, 18, 118), rotation of the third link (16, 116) from the first to the second position moves the first locking member from a first position, through an intermediate position, to a second position to release the first locking member from the first portion of the lockable link, and movement of the first locking member from the intermediate position to the second position causes the first locking member to engage the second locking member and to release the second locking member from the second portion of the lockable link; and
the hinge assembly further comprises an actuator (22, 122) operable to urge the third link from the first position to the second position, in which the moveable pivot of the third link engages the lockable link, so as to release the locking mechanism from the lockable link and to move the lockable link relative to the other of the second and fourth links.

2. A hinge assembly according to claim 1, wherein either:
the first link (12) is pivotally connected to the second link by a single pivot (28); or
the first link (112) is pivotally connected to the second link by an intermediate link, a first portion of the intermediate link (124, 126) being pivotally connected to the first link by a single pivot, and a second portion of the intermediate link being pivotally connected to the second link by a single pivot.

3. A hinge assembly according to any preceding claim, wherein the first link (12, 112) is integrally formed with, or adapted for attachment to, a vehicle body.

4. A hinge assembly according to any preceding claim, wherein the hinge assembly further comprises a control link (36, 136), a first portion of the control link being pivotally connected to the third link by a single pivot (40, 140), and a second portion of the control link being pivotally connected to the other of the second and fourth links by a single pivot (44, 144).

5. A hinge assembly according to any preceding claim, wherein the third link (16, 116) is provided with a roller (210), the roller being engageable with the locking mechanism such that when the locking mechanism is engaged with the lockable link, rotation of the third link from the first to the second position releases the locking mechanism from the lockable link.

6. A hinge assembly according to any preceding claim, wherein the locking mechanism is attached to the other of the second and fourth links from the lockable link.

7. A hinge assembly according to any preceding claim, wherein the locking mechanism is engageable with a plurality of portions of the lockable link.

8. A hinge assembly according to any preceding claim, wherein the hinge further comprises biasing means (206, 208) arranged to urge the locking mechanism into engagement with the lockable link.

9. A hinge assembly according to any preceding claim, wherein the hinge assembly further comprises first and second biasing means (206, 208) arranged to urge the first and second locking members into engagement with the first and second portions of the lockable link.

10. A hinge assembly according to any preceding claim, wherein the actuator (22) includes a combination of a piston and a supply of compressed gas.

11. A hinge assembly according to claim 10, wherein the piston is constituted by a telescopic ram (22, 122) that can be extended so as to urge the third link from the first position to the second position by release of gas into the ram from the supply of compressed gas.

12. A hinge assembly according to any preceding claim, wherein the actuator includes a portion that is pivotally connected to the third link.

13. A hinge assembly according to claim 11, wherein that end of the ram which extends so as to urge the third link from the first position to the second position is formed with an eye pivotally connected to the third link.

14. A hinge assembly according to any preceding claim, wherein the actuator (22, 122) attached to the other of the second and fourth links to which the third link is connected by the moveable pivot.

15. A vehicle comprising a bonnet and a body, wherein the bonnet is attached to the body by a hinge assembly according to any preceding claim.

## Patentansprüche

1. Gelenkanordnung (10, 110) umfassend erste (12, 112), zweite (14, 114), dritte (16, 116) und vierte (18, 118) Glieder und einen Verschlussmechanismus (20,120);
wobei das erste Glied (12, 112) drehbar mit dem zweiten Glied (14, 114) verbunden ist und integral mit einem von einem Fahrzeugkörper und einer Fahrzeughaube integral ausgebildet ist oder dazu ausgelegt ist, daran angebracht zu werden;
wobei das dritte Glied (16, 116) drehbar zwischen dem zweiten und dem vierten Glied verbunden ist;
wobei das vierte Glied (18, 118) integral mit dem anderen von einem Fahrzeugkörper und einer Fahrzeughaube ausgebildet ist oder dazu ausgelegt ist, daran angebracht zu werden; und
wobei der Verschlussmechanismus (20, 120) in Eingriff bringbar ist mit und lösbar ist von einem verschließbaren Glied (14,114; 18,118), wobei das verschließbare Glied eines aus dem zweiten und dem vierten Glied ist, um relative Bewegung zwischen dem zweiten und vierten Glied zu verhindern bzw. zu ermöglichen;
wobei das dritte Glied (16, 116) mit dem Verschlussmechanismus (20, 120) in Eingriff bringbar ist, so dass wenn der Verschlussmechanismus mit dem verschließbaren Glied in Eingriff ist, die Rotation des dritten Glieds von einer ersten zu einer zweiten Position den Verschlussmechanismus von dem verschließbaren Glied trennt, **dadurch gekennzeichnet, dass**
das dritte Glied (16, 116) drehbar mit dem verschließbaren Glied durch einen beweglichen Zapfen (29, 129) verbunden ist, der es dem dritten Glied erlaubt, relativ zu dem zweiten und vierten Glied von der ersten Position in die zweite Position, in der der Zapfen des dritten Glieds in Eingriff mit dem verschließbaren Glied steht, gedreht zu werden;
das dritte Glied (16, 116) drehbar zwischen dem zweiten und vierten Glied verbunden ist mit
einem ersten Bereich des dritten Glieds drehbar mit dem verschließbaren Glied durch den beweglichen Zapfen (29, 129) verbunden, und
einem zweiten Bereich des dritten Glieds drehbar mit dem anderen des zweiten und des vierten Glieds durch ein Zwischenglied (34, 134) verbunden, wobei ein erster Bereich des Zwischenglieds (34, 134) drehbar mit dem dritten Glied durch einen Einzelzapfen (38, 138) verbunden ist wobei ein zweiter Bereich des Zwischengliedes (34, 134) drehbar mit dem anderen des zweiten und des vierten Glieds durch einen Einzelzapfen (42, 142) verbunden ist;
wobei der Verschlussmechanismus ein erstes (212) und ein zweites (204) Verschlusselement umfasst, das in Eingriff bringbar ist mit und lösbar ist von respektive dem ersten (32, 132) und dem zweiten (58, 158) Bereich des verschließbaren Glieds,
wobei das erste Verschlusselement (212) in Eingriff bringbar ist mit dem dritten Glied (16, 116) und dem zweiten Verschlusselement (204),
wobei das erste und das zweite Verschlusselement (212, 204) so angeordnet sind, dass wenn die Verschlusselemente mit dem verschließbaren Glied (14, 114; 18, 118) in Eingriff stehen, die Rotation des dritten Glieds (16, 116) von der ersten zu der zweiten Position das erste Verschlusselement von einer ersten Position durch eine Zwischenposition zu einer zweiten Position bewegt, um das erste Verschlusselement von dem ersten Bereich des verschließbaren Glieds zu lösen, und die Bewegung des ersten Verschlusselements von der Zwischenposition zu der zweiten Position bewirkt, dass das erste Verschlusselement in das zweite Verschlusselement eingreift und sich das zweite Verschlusselement von dem zweiten Bereich des verschließbaren Glieds löst; und
die Gelenkanordnung ferner einen Betätiger (22, 122) umfasst, der betrieben werden kann, um das dritte Glied von der ersten Position zu der zweiten Position zu zwingen, in der der bewegliche Zapfen des dritten Glieds mit dem verschließbaren Glied in Eingriff steht, um den Verschlussmechanismus von dem verschließbaren Glied zu lösen und um das verschließbare Glied relativ zu dem anderen des zweiten und des vierten Glieds zu bewegen.

2. Gelenkanordnung nach Anspruch 1, wobei entweder:
das erste Glied (12) mit dem zweiten Glied durch einen Einzelzapfen (28) drehbar verbunden ist; oder
das erste Glied (112) drehbar mit dem zweiten Glied durch ein Zwischenglied verbunden ist, wobei ein erster Bereich des Zwischenglieds (124, 126) drehbar mit dem ersten Glied durch einen Einzelzapfen verbunden ist und ein zweiter Bereich des Zwischenglieds drehbar mit dem zweiten Glied durch einen Einzelzapfen verbunden ist.

3. Gelenkanordnung nach irgend einem der vorhergehenden Ansprüche, wobei das erste Glied (12, 112) integral mit einem Fahrzeugkörper ausgebildet ist oder ausgelegt ist zur Anbringung daran.

4. Gelenkanordnung nach irgend einem der vorhergehenden Ansprüche, wobei die Gelenkanordnung ferner ein Steuerglied (36, 136) umfasst, wobei ein erster Bereich des Steuerglieds drehbar mit dem dritten Glied durch einen Einzelzapfen (40, 140) verbunden ist und wobei ein zweiter Bereich des Steuerglieds drehbar mit dem anderen des zweiten und des vierten Glieds durch einen Einzelzapfen (44, 144) verbunden ist.

5. Gelenkanordnung nach irgend einem der vorhergehenden Ansprüche, wobei das dritte Glied (16, 116) mit einer Rolle (210) versehen ist, wobei die Rolle in Eingriff bringbar ist mit dem Verschlussmechanismus, so dass wenn der Verschlussmechanismus in Eingriff mit dem verschließbaren Glied ist, die Rotation des dritten Glieds von der ersten zu der zweiten Position den Verschlussmechanismus von dem verschließbaren Glied löst.

6. Gelenkanordnung nach irgend einem der vorhergehenden Ansprüche, wobei der Verschlussmechanismus an dem anderen des zweiten und des vierten Glieds als dem verschließbaren Glied angebracht ist.

7. Gelenkanordnung nach irgend einem der vorhergehenden Ansprüche, wobei der Verschlussmechanismus in Eingriff bringbar ist mit einer Mehrzahl von Bereichen des verschließbaren Glieds.

8. Gelenkanordnung nach irgend einem der vorhergehenden Ansprüche, wobei das Gelenk ferner Vorspannmittel (206, 208) umfasst, die angeordnet sind, den Verschlussmechanismus in Eingriff mit dem verschließbaren Glied zu drängen.

9. Gelenkanordnung nach irgend einem der vorhergehenden Ansprüche, wobei die Gelenkanordnung ferner erste und zweite Vorspannmittel (206, 208) umfasst, die angeordnet sind, das erste und das zweite Verschlusselement in Eingriff mit dem ersten und dem zweiten Bereich des verschließbaren Glieds zu drängen.

10. Gelenkanordnung nach irgend einem der vorhergehenden Ansprüche, wobei der Betätiger (22) eine Kombination aus einem Kolben und einer Quelle von komprimierten Gas beinhaltet.

11. Gelenkanordnung nach Anspruch 10, wobei der Kolben durch einen teleskopischen Schieber (22, 122) gebildet ist, der sich erstrecken kann, um das dritte Glied von der ersten Position zu der zweiten Position zu drängen durch Abgabe von Gas in den Schieber aus der Quelle von komprimierten Gas.

12. Gelenkanordnung nach irgend einem der vorhergehenden Ansprüche, wobei der Betätiger einen Bereich umfasst, der drehbar mit dem dritten Glied verbunden ist.

13. Gelenkanordnung nach Anspruch 11, wobei das Ende des Schiebers, das sich erstreckt, um das dritte Glied von der ersten Position zu der zweiten Position zu drängen, mit einer Öse ausgebildet ist, die drehbar mit dem dritten Glied verbunden ist.

14. Gelenkanordnung nach irgend einem der vorhergehenden Ansprüche, wobei der Betätiger (22, 122) an dem anderen des zweiten und des vierten Glieds angebracht ist, mit welchem das dritte Glied durch den beweglichen Zapfen verbunden ist.

15. Fahrzeug umfassend eine Haube und einen Körper, wobei die Haube durch eine Gelenkanordnung nach irgend einem der vorhergehenden Ansprüche an dem Körper angebracht ist.

## Revendications

1. Ensemble charnière (10, 110) comprenant des première (12, 112), deuxième (14, 114), troisième (16, 116) et quatrième (18, 118) liaisons et un mécanisme de verrouillage (20, 120) ;
la première liaison (12, 112) étant reliée en pivotement à la deuxième liaison (14, 114) et étant formée en un seul tenant avec l'un(e) d'une carrosserie de véhicule et d'un capot de véhicule ou adaptée pour y être fixée ;
la troisième liaison (16, 116) étant reliée en pivotement entre les deuxième et quatrième liaisons ;
la quatrième liaison (18, 118) étant formée en un seul tenant avec l'autre d'une carrosserie de véhicule et d'un capot de véhicule ou adaptée pour y être fixée ; et
le mécanisme de verrouillage (20, 120) pouvant s'engager avec une liaison verrouillable (14, 114 ; 18, 118) et se dégager de celle-ci, la liaison verrouillable étant l'une des deuxième et quatrième liaisons, de manière à empêcher et permettre, respectivement, un mouvement relatif entre les deuxième et quatrième liaisons ;
la troisième liaison (16, 116) pouvant s'engager avec le mécanisme de verrouillage (20, 120) de telle sorte que, lorsque le mécanisme de verrouillage est engagé avec la liaison verrouillable, une rotation de la troisième liaison de la première à la deuxième position libère le mécanisme de verrouillage de la liaison verrouillable,
**caractérisé en ce que**
la troisième liaison (16, 116) est reliée en pivotement à la liaison verrouillable par un pivot mobile (29,129), ce qui permet à la troisième liaison de tourner par rapport aux deuxième et quatrième liaisons d'une première position à une deuxième position où le pivot de la troisième liaison s'engage avec la liaison verrouillable ;
la troisième liaison (16, 116) est reliée en pivotement entre les deuxième et quatrième liaisons avec
une première partie de la troisième liaison reliée en pivotement à la liaison verrouillable par le pivot mobile (29, 129), et
une deuxième partie de la troisième liaison reliée en pivotement à l'autre des deuxième et quatrième liaisons par une liaison intermédiaire (34, 134), une première partie de la liaison intermédiaire (34, 134) étant reliée en pivotement à la troisième liaison par un seul pivot (38, 138), et une deuxième partie de la liaison intermédiaire (34, 134) étant reliée en pivotement à l'autre des deuxième et quatrième liaisons par un seul pivot (42, 142) ;
le mécanisme de verrouillage comprend des premier (212) et deuxième (204) organes de verrouillage pouvant s'engager avec des première (32, 132) et deuxième (58, 158) parties respectives de la liaison verrouillable et se dégager de celles-ci,
le premier organe de verrouillage (212) pouvant s'engager avec la troisième liaison (16, 116) et le deuxième organe de verrouillage (204),
les premier et deuxième organes de verrouillage (212, 204) étant agencés de telle sorte que, lorsque les organes de verrouillage sont engagés avec la liaison verrouillable (14, 114, 18, 118), une rotation de la troisième liaison (16, 116) de la première à la deuxième position déplace le premier organe de verrouillage d'une première position, à travers une position intermédiaire, à une deuxième position pour libérer le premier organe de verrouillage de la première partie de la liaison verrouillable, et un mouvement du premier organe de verrouillage de la position intermédiaire à la deuxième position amène le premier organe de verrouillage à s'engager avec le deuxième organe de verrouillage et pour libérer le deuxième organe de verrouillage de la deuxième partie de la liaison verrouillable ; et
l'ensemble charnière comprend en outre un actionneur (22, 122) pouvant fonctionner pour pousser la troisième liaison de la première position à la deuxième position, où le pivot mobile de la troisième liaison s'engage avec la liaison verrouillable, de manière à libérer le mécanisme de verrouillage de la liaison verrouillable et à déplacer la liaison verrouillable par rapport à l'autre des deuxième et quatrième liaisons.

2. Ensemble charnière selon la revendication 1, dans lequel soit:
la première liaison (12) est reliée en pivotement à la deuxième liaison par un seul pivot (28) ; soit
la première liaison (112) est reliée en pivotement à la deuxième liaison par une liaison intermédiaire, une première partie de la liaison intermédiaire (124, 126) étant reliée en pivotement à la première liaison par un seul pivot, et une deuxième partie de la liaison intermédiaire étant reliée en pivotement à la deuxième liaison par un seul pivot.

3. Ensemble charnière selon l'une des revendications précédentes, dans lequel la première liaison (12, 112) est formée en un seul tenant avec une carrosserie de véhicule ou adaptée pour être fixée à celle-ci.

4. Ensemble charnière selon l'une des revendications précédentes, dans lequel l'ensemble charnière comprend en outre une liaison de commande (36, 136), une première partie de la liaison de commande étant reliée en pivotement à la troisième liaison par un seul pivot (40, 140), et une deuxième partie de la liaison de commande étant reliée en pivotement à l'autre des deuxième et quatrième liaisons par un seul pivot (44, 144).

5. Ensemble charnière selon l'une des revendications précédentes, dans lequel la troisième liaison (16, 116) est pourvue d'un rouleau (210), le rouleau pouvant s'engager avec le mécanisme de verrouillage de telle sorte que, lorsque le mécanisme de verrouillage est engagé avec la liaison verrouillable, une rotation de la troisième liaison de la première à la deuxième position libère le mécanisme de verrouillage de la liaison verrouillable.

6. Ensemble charnière selon l'une des revendications précédentes, dans lequel le mécanisme de verrouillage est fixé à l'autre des deuxième et quatrième liaisons à partir de la liaison verrouillable.

7. Ensemble charnière selon l'une des revendications précédentes, dans lequel le mécanisme de verrouillage peut s'engager avec une pluralité de parties de la liaison verrouillable.

8. Ensemble charnière selon l'une des revendications précédentes, dans lequel la charnière comprend en outre des moyens de sollicitation (206, 208) agencés pour amener le mécanisme de verrouillage à s'engager avec la liaison verrouillable.

9. Ensemble charnière selon l'une des revendications précédentes, dans lequel l'ensemble charnière comprend en outre des premier et deuxième moyens de sollicitation (206, 208) agencés pour amener les premier et deuxième organes de verrouillage à s'engager avec les première et deuxième parties de la liaison verrouillable.

10. Ensemble charnière selon l'une des revendications précédentes, dans lequel l'actionneur (22) comporte une combinaison d'un piston et d'une alimentation en gaz comprimé.

11. Ensemble charnière selon la revendication 10, dans lequel le piston est constitué d'un vérin télescopique (22, 122) qui peut s'étendre de façon à pousser la troisième liaison de la première position à la deuxième position par dégagement de gaz dans le vérin à partir de l'alimentation en gaz comprimé.

12. Ensemble charnière selon l'une des revendications précédentes, dans lequel l'actionneur comporte une partie qui est reliée en pivotement à la troisième liaison.

13. Ensemble charnière selon la revendication 11, dans lequel l'extrémité du vérin qui s'étend de manière à pousser la troisième liaison de la première position à la deuxième position est formée avec un oeil relié en pivotement à la troisième liaison.

14. Ensemble charnière selon l'une des revendications précédentes, dans lequel l'actionneur (22, 122) est relié à l'autre des deuxième et quatrième liaisons à laquelle la troisième liaison est reliée par le pivot mobile.

15. Véhicule comprenant un capot et un corps, dans lequel le capot est fixé au corps par un ensemble charnière selon l'une des revendications précédentes.
